# EUROPÄISCHE PATENTSCHRIFT

(11) **EP 1 448 961 B1**
(45) Veröffentlichungstag und Bekanntmachung des Hinweises auf die Patenterteilung: **13.04.2005**
(21) Anmeldenummer: 02783379.7
(22) Anmeldetag: 15.11.2002
(51) Int. Cl.: G01G 23/00

(54) **WAAGSCHALENTRÄGER MIT ÜBERLASTSCHUTZ**
SCALE PAN CARRIER HAVING OVERLOAD PROTECTION
SUPPORT DE PLATEAU DE BALANCE DOTE D'UNE PROTECTION CONTRE LES SURCHARGES

(30) Priorität: 15.11.2001 DE 10156013
(43) Veröffentlichungstag der Anmeldung: 25.08.2004
(73) Patentinhaber: Mettler-Toledo GmbH, 8606 Greifensee (CH)
(72) Erfinder: Burkhard, Hans-Rudolf, CH-8492 Wila (CH)
(86) Internationale Anmeldenummer: PCT/IB2002/004770
(87) Internationale Veröffentlichungsnummer: WO 2003/042643

(56) Entgegenhaltungen:
- EP-A- 0 981 041
- DE-U- 9 406 898
- DE-U- 20 007 612
- DE-U- 29 702 954
- GB-A- 2 245 076
- US-B1- 6 232 567

## Beschreibung

Die Erfindung bezieht sich auf einen Waagschalenträger für eine Waage mit einer Waagschale und mit einer einen Lastaufnahmebereich sowie einen feststehenden Bereich aufweisenden Wägezelle, wobei der Waagschalenträger am Lastaufnahmebereich der Wägezelle befestigt ist und einen in lösbarem Eingriff mit dem Waagschalenträger befindlichen Überlastschutz aufweist.

Die Funktion eines Überlastschutzes in einer Waage ist die Entkopplung der Einrichtung zur Lastaufnahme, insbesondere der Waagschale von der Wägezelle bei Überschreiten einer zulässigen Höchstiast, wobei deren Kraft weitgehend vertikal auf die Waagschale wirkt. Dabei wird die Wägezelle vor der Wirkung zu hoher überwiegend vertikal eingeleiteter Kräfte geschützt, die entweder statisch durch ein eine Höchstiast überschreitendes Gewicht, oder dynamisch durch eine beispielsweise zu schnell aufgelegte Last hervorgerufen werden kann.

Ein solcher Überiastschutz für eine Kraftmessvorrichtung ist in der EP-A-0 981 041 offenbart. Der in dieser Schrift beschriebene Lastaufnahmebereich der Kraftmessvorrichtung setzt sich aus zwei Teilen zusammen, welche mittels eines vorgespannten elastischen Elements miteinander in Eingriff gehalten sind. Unter der Wirkung einer eine definierte Höchsttast überschreitenden Last, die in die Kraftmessvorrichtung eingeleitetet wird, wird der zweite Teil gegenüber dem ersten Teil entgegen der Vorspannung des elastischen Elements ausgelenkt und beschleunigt, bis er an einem stationären Anschlag zum Stillstand kommt Diese Entkopplung des ersten die Krafteinleitung erfahrenden Teils vom zweiten im Rahmen der zulässigen Belastung der Kraftmesseinrichtung der Weiterleitung der Kraft an die Messzelle dienenden Teils, verhindert somit eine Beschädigung der Kraftmesszelle unter der Wirkung einer Überlast.

Die US-B-6 232 567 offenbart eine Kraftmessvorrichtung, insbesondere eine Waage, mit einem Waagschalenträger, welcher mit einem Waagschalenaufnahmekonus mittels einer vorgespannten Schraubfeder kraftschlüssig verbunden ist Die Schraubfeder ist auf dem Aussenumfang eines fest mit dem Waagschalenträger verbundenen und sich von diesem nach oben erhebenden rohrförmigen Teils geführt, in dessen Innerem ein mit dem Waagschalenaufnahmekonus verbundener Bolzen verschiebbar geführt ist. Bolzen und rohrförmiges Teil ragen über die Unterseite des Waagschalenträgers in eine Ausnehmung des feststehenden Bereichs der Wägezelle hinein und stehen, wenn die Last auf der Waagschale sich im spezifizierten Bereich der Waage befindet, an ihrer Unterseite miteinander in Verbindung. Bei einer zu hohen vertikal auf den Lastaufnahmebereich wirkenden Kraft, beispielsweise infolge einer zu hohen aufgelegten Last löst sich diese Verbindung. Der Bolzen bewegt sich nach unten, bis er an einem stationären Anschlag in der Ausnehmung zum Stillstand kommt.

In der DE-U-94 06 898 ist eine Vorrichtung für eine Waage offenbart, die einerseits als Überlastschutz für zu hohe vertikal auf die Waagschale wirkende Kräfte dient, und andererseits das Gehänge gegenüber seitlich eingeleiteten - beispielsweise von schräg oben oder horizontal von der Seite kommend, insbesondere aufgrund aussermittig aufgelegter Lasten - und ein Verschwenken oder Verkippen des Lastaufnehmers bewirkenden Kräften schützt.

Die US-A-4 574 898 offenbart eine Waage mit einer Einpunktauflage für die Waagschale, die einen Schutz bietet gegen ein Verkippen der Waagschale aufgrund a-zentrisch aufgelegter Lasten, mittels Anschlägen die unterhalb der Ränder der Waagschale, beispielsweise rund um die Waagschale, an deren Basis befestigt sind.

Im Zuge vermehrter Qualitätskontrolle während der Produktentstehung ist in zunehmendem Masse auch der Einsatz von Waagen gefordert. Für eine Integration in automatisierte Produktions- und Testanlagen sind insbesondere Waagen in modularer Ausführung - sogenannte Wiegemodule - geeignet. Einen Einsatz von solchen integrierten Wiegemodulen findet man bevorzugt in Anlagen für die Produktion und Überprüfung von kleinen, teueren Teilen, beispielsweise in Abfüll- und Verpackungsmaschinen für Tabletten in der Pharmaindustrie, oder bei der Kontrolle von Kugellagern. Häufig ist es notwendig einen an die Anwendung des Wiegemoduls angepassten Aufbau auf der Waagschale beziehungsweise einer speziellen Lastaufnahmeplattform zu befestigen. Dabei befindet sich diese, aufgrund der hohen Anforderungen an die Reproduzierbarkeit einer Wägung, vorzugsweise in einer festen Verbindung mit dem der Lasteinleitung in die Wägezelle dienenden Teil, insbesondere einem Waagschalenträger. In einem solchen Fall besteht jedoch die Notwendigkeit eines Schutzes der Wägezelle vor einer Beschädigung aufgrund von orthogonal zur eingeleiteten Kraft wirkenden Drehmomenten, beispielsweise hervorgerufen durch tangential an der Waagschale angreifende Kräfte. Solche Kräfte treten insbesondere dann auf, wenn vorgesehen ist, einen Aufbau, insbesondere die Waagschale, auf der Einrichtung zur Lastaufnahme, namentlich dem Waagschalenträger, aufzuschrauben.

Es sind Einrichtungen zur Bestimmung von Drehmomenten bekannt, die einen sogenannten Überlastschutz, das heisst eine Sicherung gegen zu grosse auf die Messeinrichtung wirkende Drehmomente aufweisen. Ein solcher Drehmoment-Überlastschutz ist zum Beispiel in der EP-A-0 279 182 offenbart. Eine Messachse sowie eine das Drehmoment einleitende Achse sind je mit einer Kupplungshälfte versehen, wobei diese im Normalbetrieb durch eine vorgespannte Feder mittels Zähnen ineinander eingreifend zusammen gedrückt werden. Infolge eines zu hohen Drehmoments lösen die beiden Kupplungshälften entgegen der Federkraft ihren Eingriff, wobei eine Hälfte rückwärtig in Kontakt mit einer Reibungsfläche eines umgebenden feststehenden Gehäuses gelangt. Der Abstand zwischen Reibungsfläche und Kupplungshälfte ist erheblich kleiner als der Hub der Kupplungszähne. Somit wird ein Teil des zu hohen Drehmoments vom Gehäuse aufgenommen und die Messeinrichtung entlastet.

Waagen benötigen eine speziell auf ihre Funktion, nämlich des Bestimmens einer in Richtung der Schwerkraft wirkenden Last, ausgerichtete Lösung für eine Sicherung gegen zu hohe orthogonal zur Richtung der Lasteinleitung wirkende Drehmomente. Für die oben genannten, gemäss dem Stand der Technik beschriebenen Waagen ist eine solche Lösung nicht bekannt.

Aufgabe der vorliegenden Erfindung ist es daher einen Waagschalenträger vorzuschlagen, der eine Drehmoment-Sicherung aufweist, dergestalt dass die Wägezelle gegen die Wirkung zu hoher orthogonal zur Richtung der Lasteinleitung wirkender Drehmomente, insbesondere tangential an einer Waagschale beziehungsweise einer Lastaufnahmeplattform angreifende Kräften geschützt ist.

Diese Aufgabe wird erfindungsgemäss mit einem Waagschalenträger gemäss dem Anspruch 1 gelöst

Der erfindungsgemässe Waagschalenträger für eine Waage mit einer Waagschale und mit einer einen Lastaufnahmebereich sowie einen feststehenden Bereich aufweisenden Wägezelle, weist einen in lösbarem Eingriff mit dem Waagschalenträger befindlichen Überlastschutz bezüglich zu hoher vertikal wirkender Kräfte auf. Der Waagschalenträger befindet sich einerseits mit der Waagschale in fester Verbindung und ist andererseits am Lastaufnahmebereich der Wägezelle befestigt, wobei er eine Drehmoment-Sicherung gegen zu hohe orthogonal zur Richtung der Lasteinleitung wirkende, tangential an der Waagschale und/oder dem Waagschalenträger angreifende Kräfte aufweist und diese Drehmoment-Sicherung in den Überlastschutz integriert ist.

Die Mittel zur Sicherung einer Wägezelle gegen ein Verdrehen der Einrichtung zur Lastaufnahme bewirken, dass beim Befestigen, insbesondere beim Festschrauben, eines Aufbaus auf der Waagschale infolge eines zu grossen Moments auf diese, damit auf den Waagschalenträger und folglich auf den Lastaufnahmebereich der Wägezelle im Sinne einer Momentankopplung, die Wägezelle nicht durch laterale Kräfte irreversibel deformiert wird. Die Folgen einer solchen irreversiblen Verformung der Wägezelle würde sich zumindest in einer Verfälschung des Wägeergebnisses niederschlagen, im schlimmsten Fall in einer Zerstörung der Wägezelle.

In einer bevorzugten Ausgestaltung der Erfindung weist der Waagschalenträger einen Waagschalenaufnahmekonus auf, wobei die Drehmoment-Sicherung ein den Waagschalenträger mit dem Waagschalenaufnahmekonus in Eingriff haltendes elastisches Element, insbesondere eine vorgespannte Schraubfeder, aufweist.

Die Drehmoment-Sicherung besitzt insbesondere Eingriffelemente zum Entkoppeln und Wiederankoppeln des Waagschalenaufnahmekonus vom und an den Waagschalenträger, wobei diese mindestens eine Rastposition für eine Zentrierung der Waagschale in eine stabile Position aufweisen.

In einer besonderen Ausführungsform einer Waage, die ihren Einsatz in einer Umgebung findet, in welcher die Gefahr besteht, dass Staub und/oder Spritzwasser ins Innere des Waagengehäuses eindringen können, ist die Drehmoment-Sicherung derart ausgestaltet, dass für einen vom Waagschalenträger entkoppelten Waagschalenaufnahmekonus ein Anschlag vorhanden ist, der ein vollständiges Herausgleiten der Eingriffelemente auseinander vermeidet.

In einer vorteilhaften Ausführungsform der Erfindung weist der Waagschalenträger ein nach unten ragendes rohrförmiges Teil mit mindestens einer Nocke an seinem unteren Ende auf und einen in Richtung der Lasteinleitung weisenden, mit dem Waagschalenaufnahmekonus verbundenen Führungsbolzen mit einem mindestens eine Kerbe aufweisenden Bolzenkopf, wobei die Drehmoment-Sicherung in einem lösbaren Eingriff von Nocke und Kerbe besteht.

In einer anderen Ausführung besitzt der Waagschalenträger ein nach unten ragendes rohrförmiges Teil mit mindestens einer v-förmigen Rille an seinem unteren Ende und einen in Richtung der Lasteinleitung weisenden, mit dem Waagschalenaufnahmekonus verbundenen Führungsbolzen mit einem nahe seinem unteren Ende befindlichen Querbolzen, wobei die Drehmoment-Sicherung in einem lösbaren Eingriff von Querbolzen und Rille besteht. Alternativ dazu kann der mit dem Waagschalenaufnahmekonus verbundene Führungsbolzen mit einem mindestens eine nach oben ragende Erhebung aufweisenden Bolzenkopf versehen sein, wobei die Drehmoment-Sicherung in einem lösbaren Eingriff von Erhebung und Rille besteht.

Insbesondere ist die die Drehmoment-Sicherung auslösende Kraft durch die Vorspannung der Schraubfeder einstellbar.

In einer besonders bevorzugten Ausgestaltung der Erfindung ist die Vorrichtung zur Kraftübertragung in der Wägezelle integrierter Bestandteil eines Materialblocks, wobei die Vorrichtung zur Kraftübertragung ein Parallelogramm, mindestens ein Koppelelement und mindestens einen Kraftübertragungshebel aufweist, deren Materialbereiche durch materialfreie Bereiche in Form dünner den Materialblock senkrecht zu seiner ausgedehnten Ebene durchtrennender Schnittlinien gebildet sind.

Einzelheiten des erfindungsgemässen Waagschalenträgers sowie einer einen solchen aufweisenden Waage ergeben sich anhand der Beschreibung eines in den Zeichnungen dargestellten Ausführungsbeispiels. Es zeigen:
- Figur 1: eine Wägezelle mit einem erfindungsgemässen Waagschalenträger bei abgenommenem Messwandler im Schnitt,
- Figur 2: einen Waagschalenträger mit einem Überlastschutz in einer ersten Ausführungsform mit integrierter Drehmoment-Sicherung
- Figur 3: einen Führungsbolzen der erfindungsgemässen Drehmoment-Sicherung aus Figur 2
- Figur 4: einen Waagschalenträger mit einem Überlastschutz in einer zweiten Ausführungsform mit integrierter Drehmoment-Sicherung
- Figur 5: einen Führungsbolzen einer weiteren Ausführungsform der erfindungsgemässen Drehmoment-Sicherung
- Figur 6: den Bereich des Durchtritts der die Kraft einer Last übertragenden Elemente durch das Waagengehäuse an dessen Oberseite als Ausschnitt-Zeichnung, im Schnitt,
- Figur 7: eine dreidimensionale Darstellung aus der Sicht von schräg oben auf den Labyrinth-Innenring.

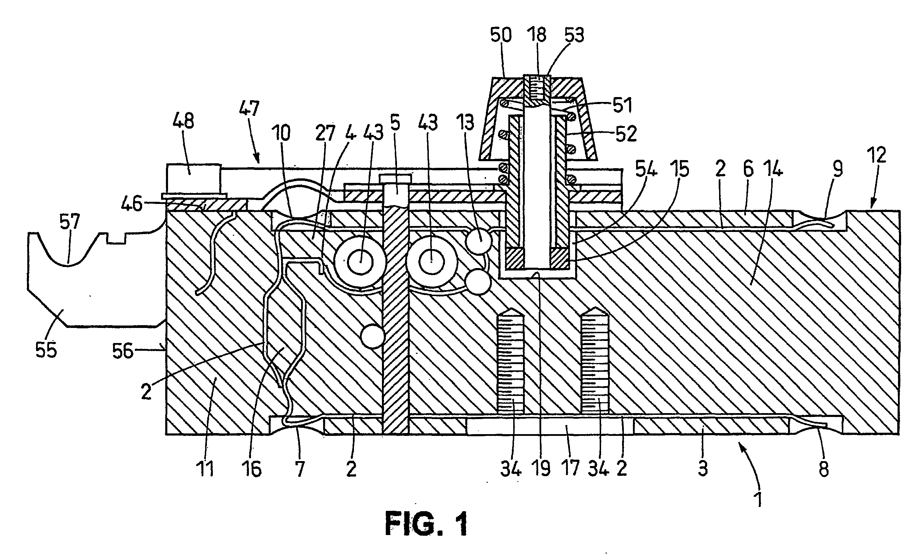

Die Figur 1 zeigt im Schnitt durch eine Ebene parallel zu ihren ausgedehnten Seitenflächen eine Wägezelle bei abgenommenem Messwandler. Die Wägezelle beinhaltet eine aus einem einstückigen im wesentlichen quaderförmigen Materialblock 1 ausgebildete Vorrichtung zur Kraftübertragung, deren Materialbereiche durch materialfreie Bereiche in Form von dünnen, den Materialblock 1 senkrecht zu seiner ausgedehnten Seitenfläche, in den Ebenen parallel zur ausgedehnten Fläche des Materialblocks, durchsetzenden Schnittlinien 2 voneinander getrennt sind. Die Materialbereiche bilden ein Parallelogramm mit einem oberen und einem unteren Parallelogramm-Lenker 3, 6 und einem einen feststehenden Bereich 12 bildenden Parallelogramm-Schenkel sowie einem an konkav ausgebildeten, durch materialfreie Bereiche begrenzten Biegestellen 7, 8, 9, 10 den Lastaufnahmebereich 11 bildenden, vertikal auslenkbaren Parallelogramm-Schenkel. Weitere Materialbereiche im Inneren des Materialblocks 1 bilden einen Kraftübertragungshebel 27.

Der Lastaufnahmebereich 11 ist über ein längssteifes, biegeelastisches Koppelelement 16 mit dem kurzen Hebelarm des einen Hebels 27 verbunden. Dieser stützt sich über ein Biegelager 4 an einem ins Innere des Materialblocks 1 reichenden Abschnitt 14 des feststehenden Bereichs 12 ab. Die Bohrungen 43 dienen der Befestigung einer hier nicht gezeigten Verlängerung des längeren Hebelarms des Hebels 27 zu einer hier ebenfalls nicht dargestellten Kraftkompensationsvorrichtung. Die Bauform einer solchen Vorrichtung zur Kraftübertragung hat den Vorteil einer hohen Festigkeit bei kleinem Bauvolumen.

Das Parallelogramm 3, 6, 11, 12, das Koppelelement 16, sowie der Hebel 27 und das Biegelager 4 sind durch materialfreie Bereiche in Form dünner Schnittlinien 2 im Materialblock 1 begrenzt. Diese Schnittlinien 2 werden vorzugsweise mittels Funkenerosion mit einem Erosionsdraht erzeugt, wobei Bearbeitungsbohrungen 13 zur Einführung des Erosionsdrahtes vorhanden sind.

Auf der zum oberen Rand des oberen Parallelogramm-Lenkers 6 parallelen oberen Randfläche 46 des Lastaufnahmebereichs 11 ist ein sich in Richtung des feststehenden Bereichs 12 etwa bis zur Mitte des oberen Parallelogramm-Lenkers 6 erstreckender Waagschalenträger 47 mittels zweier Schraubbolzen 48 (nur einer davon ist in der Figur 1 zu sehen) befestigt, die in sich parallel zur ausgedehnten Ebene des Materialblocks 1 und quer zur Längsrichtung der Parallelogramm-Lenker 3, 6 erstreckenden Gewindebohrungen festgeschraubt sind. An seinem dem Lastaufnahmebereich 11 abgewandten Ende ist als Teil des Waagschalenträgers 47 ein Waagschalenaufnahmekonus 50 mit diesem verbunden. Dabei bewirkt die Vorspannung der Schraubfeder 51 einen Kraftschluss zwischen Waagschalenaufnahmekonus 50 und dem übrigen Waagschalenträger 47. Die Schraubfeder 51 ist auf dem Aussenumfang eines sich über die Oberseite des Waagschalenträgers 47 erhebenden rohrförmigen Teils 52 geführt. In dessen Innerem ist ein mit dem Waagschalenaufnahmekonus 50 verbundener Führungsbolzen 53 verschiebbar geführt.

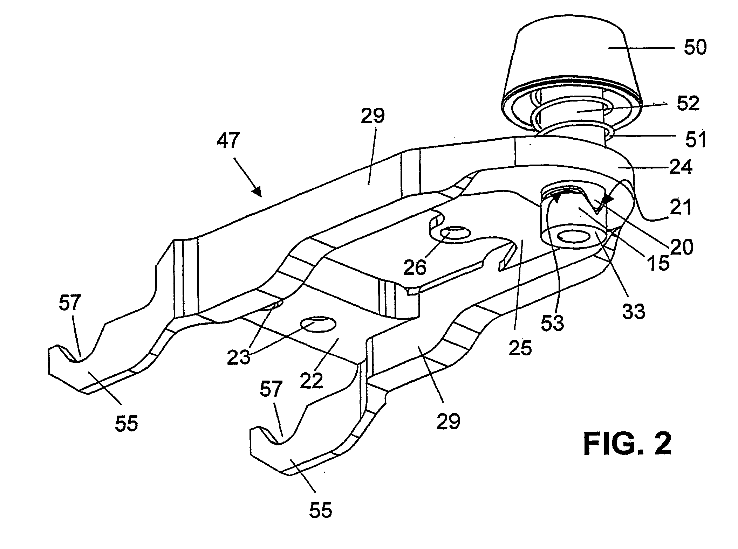

Das rohrförmige Teil 52 und der darin gelagerte Führungsbolzen 53 ragen beide über die dem oberen Parallelogramm-Lenker 6 zugewandte Unterseite des Waagschalenträgers 47 hinaus und erstrecken sich mit Spiel in eine in dem oberen Parallelogramm-Lenker 6 und dem daran angrenzenden Bereich des feststehenden Abschnitts 14 ausgebildete Ausnehmung 54 hinein. Der Führungsbolzen 53 schliesst an seinem unteren Ende mit einem Bolzenkopf 15 ab, wobei im Falle einer in ihrem spezifizierten Lastbereich arbeitenden Waage der Bolzenkopf 15 durch die Vorspannung der Schraubfeder 51 im Eingriff mit dem unteren Ende des rohrförmigen Teils 52 des Waagschalenträgers 47 ist. Der Eingriff erfolgt mittels zweier über den unteren Rand des rohrförmigen Teils 52 hinausragender dreieckförmiger Nocken, die sich in entsprechende Kerben des Bolzenkopfs 15 erstrecken. Weder die Nocken noch die Kerben sind aus der Figur 1 erkennbar, ihre Wirkungsweise wird jedoch in Zusammenhang mit der Figur 2 gezeigt und erläutert. Der Führungsbolzen 53 mit samt dem Bolzenkopf 15 wirkt somit in Bezug auf das rohrförmige Teil 52 einerseits als ein Überlastschutz, bei welchem im Falle zu hoher auf den Waagschalenaufnahmekonus 50 eingeleiteter Kräfte eine Trennung des Eingriffs erfolgt und der Bolzenkopf 15 gegen den Boden 19 der Ausnehmung 54 anschlägt. Andererseits kann auch ein orthogonal zur Richtung der Lasteinleitung wirkendes Drehmoment auf den Waagschalenaufnahmekonus 50 eine Trennung des Eingriffs von Bolzenkopf 15 und rohrförmigem Teil 52 bewirken. Die Wirkungsweise dieser Drehmoment-Sicherung wird weiter unten näher erläutert.

Der mit dem Waagschalenaufnahmekonus 50 verbundene Führungsbolzen 53 verfügt über eine Gewindebohrung 18 mittels welcher die hier nicht dargestellte Waagschale am Waagschalenaufnahmekonus 50 festgeschraubt werden kann. Diese feste Verbindung zwischen Waagschale und Waagschalenaufnahmekonus 50 gewährleistet eine hohe Stabilität eines in einer Produktions- oder Kontrollanlage integrierten Wiegemoduls im Sinne reproduzierbar durchzuführender Gewichtsmessungen. Die gezeigte Schraubverbindung ist dabei nur eine von vielen möglichen Varianten.

In diesem Zusammenhang ist der in der Wägetechnik gebräuchliche Begriff Waagschale nicht auf einen schalenförmigen Lastträger eingeschränkt zu verstehen, sondern als eine das Wägegut für eine Wägung aufnehmende Vorrichtung jedweder Form zu betrachten, insbesondere ist hier auch eine Lastaufnahme-Plattform, auf welcher ein Aufbau befestigt werden kann, in den Begriff Waagschale eingeschlossen. Ebenso kann der Aufbau selbst eine Waagschale darstellen.

Am unteren Ende des Materialblocks liegt der Ausnehmung 54 eine Aussparung 17 des unteren Parallelogramm-Lenkers 3, die der Befestigung der Wägezelle an einer hier nicht gezeigten Bodenplatte mittels in die Gewindebohrungen 34 eingedrehter Schraubbolzen dient, gegenüber.

Der sich im wesentlichen über dem oberen Parallelogramm-Lenker 6 erstreckende Waagschalenträger 47 ragt über die seitliche Endfläche 56 des Lastaufnahmebereichs 11 des Materialblocks hinaus und weist dort ein Paar von sich in Richtung auf den unteren Parallelogramm-Lenker 3 etwa bis in die Mitte der Höhe des Materialblocks erstreckenden, abgebogenen Auslegern 55 auf. Die beiden Ausleger 55, von denen nur einer in der Figur zu sehen ist, sind mit einer Vertiefung 57 versehen, in welche zu Kalibrierzwecken ein Referenzgewicht aufgelegt werden kann.

Mit dem Bezugszeichen 5 ist ein in den Materialblock ein- und diesen durchdringender Schocksicherungs-Bolzen gekennzeichnet. Er dient der Aufnahme von Kräften, die aufgrund seitlicher Stösse und Schläge, wie sie beispielsweise beim Transport erfolgen können, entstehen und bewahrt somit die Wägezelle, insbesondere deren empfindliche Biegelager vor einer Beschädigung.

In der Figur 2 ist in der Sicht von schräg unten eine perspektivische Darstellung eines erfindungsgemässen Waagschalenträgers 47 zu sehen. An seinem dem Waagschalenaufnahmekonus 50 abgewandten Ende sind die zwei Ausleger 55 zur Aufnahme für ein Referenzgewicht mit nach oben offenen Vertiefungen 57 versehen. Die sich in Richtung des Waagschalenaufnahmekonus 50 an die Ausleger 55 anschliessenden Seitenteile 29 verbindet ein Quersteg 22, der mit zwei Durchgangsbohrungen 23 zur Befestigung des Waagschalenträgers 47 am Lastaufnahmebereich 11 der Wägezelle (siehe Figur 1) versehen ist. Im weiteren Verlauf in Richtung des Waagschalenaufnahmekonus 50 münden die Seitenteile 29 in einen gemeinsamen bogenförmigen Bereich 24 ein, der eine Verstrebung 25 mit einem Durchgangsloch 26 für den Schocksicherungs-Bolzen 5 (siehe Figur 1) aufweist. Eine Schraubfeder 51 stützt sich am bogenförmigen Bereich 24 des Waagschalenträgers 47 ab und wird am Aussenumfang eines nach oben ragenden rohrförmigen Teils 52 geführt. Innerhalb des rohrförmigen Teils 52 ist ein mit dem Waagschalenaufnahmekonus 50 verbundener Führungsbolzen 53 geführt, wobei die Schraubfeder 51 an ihrem anderen Ende den Waagschalenaufnahmekonus 50 abstützt. Die Schraubfeder 51 ist zwischen der Oberseite des bogenförmigen Bereichs und dem mittels rohrförmigem Teil 52 und Führungsbolzen 53 verschieblichen Waagschalenaufnahmekonus 50 vorgespannt, wobei der Führungsbolzen 53 an seinem unteren Ende mit einem Bolzenkopf 15 als Anschlag gegenüber dem rohrförmigen Teil 52 versehen ist. Der Bolzenkopf 15 ist in der Figur 2 als eine Art Hülse gestaltet, die dreieckförmige Kerben 21 aufweist. Somit bewirkt die Vorspannung der Schraubfeder 51 einen Eingriff der sich am unteren Ende des rohrförmigen Teils 52 befindlichen Nocken 20 in je eine Kerbe 21 des Bolzenkopfs 15.

Greift nun eine orthogonal zur Lasteinleitung gerichtete, über einen durch die Vorspannung der Schraubfeder 51 vordefinierten Wert hinaus gehende Kraft tangential an der fest mit dem Waagschalenaufnahmekonus 50 verschraubten Waagschale an, so gleiten die Kerben 21 unter weiterem Anspannen der Schraubfeder 51 entlang den schrägen Begrenzungen einer jeweiligen Nocke 20, bis sich die Nocken aus den Kerben des Bolzenkopfs 15 gelöst haben und damit der Führungsbolzen 53 von dem rohrförmigen Teil 52 entkoppelt ist. Nun genügen geringere tangentiale Kräfte, um die Waagschale weiter zu verdrehen und nach einer 180° Drehung die Nocken 20 und die Kerben 21 wieder ineinander einrasten zu lassen. Dabei ist die Anzahl möglicher Rastpositionen nicht auf nur zwei beschränkt. Je nach Vorhandensein und Anordnung der Nocken 20 am rohrförmigen Teil 52 beziehungsweise der entsprechenden Kerben 21 am Führungsbolzen 53, kann es eine, zwei oder mehr stabile Rastpositionen geben. Zur Entkopplung des Führungsbolzens 53 vom rohrförmigen Teil 52 ist es allerdings für eine bestimmungsgemässe Funktion der Drehmoment-Sicherung nicht zwangsläufig notwendig, dass die Nocken 20 vollständig aus den Kerben 21 heraus gleiten. Es genügt vielmehr, wenn sich ihr kraftschlüssiger Eingriff löst.

Im Falle einer zu hohen vertikal eingeleiteten Last, das heisst in Wirkung als Überlastschutz, lösen sich die Nocken 20 und die Kerben 21 senkrecht nach unten voneinander und der Führungsbolzen 53 schlägt mit seiner unteren Fläche 33 an den Boden 19 der Ausnehmung 54 im Materialblock 1 (siehe Figur 1) an. Bei Nachlassen der Kraftwirkung rasten die Nocken 20 und die Kerben 21 wieder ineinander ein.

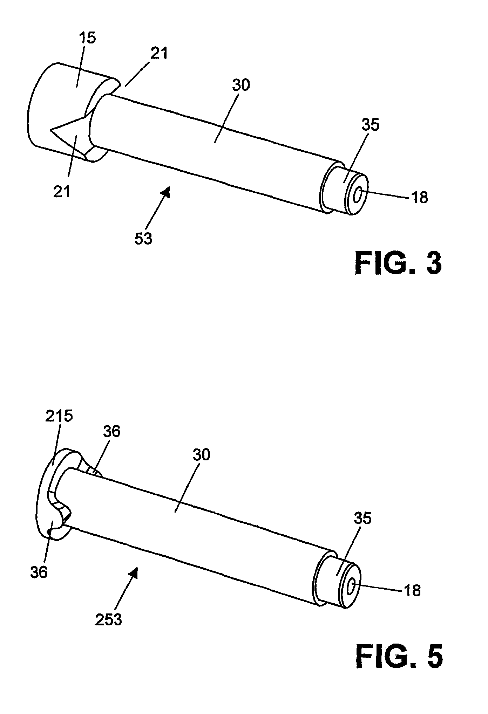

Die Figur 3 zeigt den vom Waagschalenaufnahmekonus 50 gelösten Führungsbolzen 53 in perspektivischer Darstellung. Der Bolzenkopf 15 weist in seiner einem Bolzenschaft 30 zugewandten Seite einander gegenüber liegend je eine Kerbe 21 auf, in welche die hier nicht gezeigten Nocken 20 (siehe Figur 2) im Falle einer im spezifizierten Bereich arbeitenden Waage eingreifen. Es können sich selbstverständlich auch mehr Kerben um den Bolzenschaft 30 gruppieren, beispielsweise vier voneinander im Winkel von 90° beabstandete Kerben. Denkbar ist auch eine Ausführungsform, bei welcher der Bolzenkopf 15 nur eine Kerbe und das rohrförmige Teil 52 an seinem unteren Ende nur eine Nocke aufweist. An seinem dem Bolzenkopf gegenüberliegenden Ende weist der Bolzenschaft 30 eine Verschmälerung 35 auf, welche einer definierten Verbindung zwischen Führungsbolzen 53 und Waagschalenaufnahmekonus 50 dient, beispielsweise kann die Verschmälerung 35 als Gewinde ausgebildet sein, auf das der Waagschalenaufnahmekonus 50 (siehe Figur 2) aufgeschraubt werden kann.

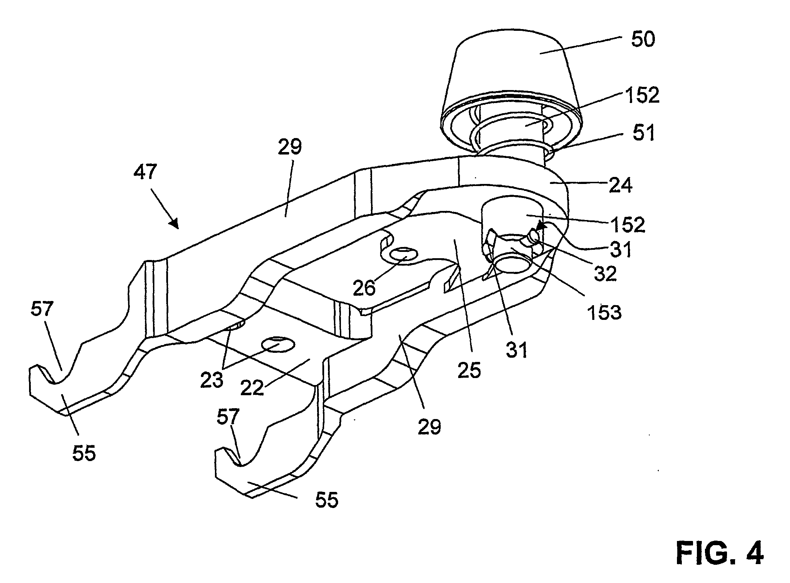

In der Figur 4 ist eine andere Ausführungsform des Waagschalenträgers 47 gezeigt. Teile, die in ihrer Ausführungsform mit denen der Figur 2 übereinstimmen, sind mit den selben Bezugszeichen bezeichnet und hier nicht noch einmal beschrieben. Das sich nach unten erstreckende rohrförmige Teil 152 weist an seinem unteren Rand vier im Abstand von je 90° radial angeordnete, v-förmige Rillen 31 auf. Der Führungsbolzen 153 besitzt nahe seinem unteren Ende einen Querbolzen 32, der auf beiden Seiten des Führungsbolzens 153 herausragend in zwei einander gegenüber liegende v-förmige Rillen 31 eingreift.

Die Wirkungsweise dieses Überlastschutzes sowie der darin integrierten Drehmoment-Sicherung gestaltet sich hier wie folgt: im vorgespannten Zustand der Schraubfeder 51 greift der Querbolzen 32 mit seinen beiden Enden in zwei einander gegenüberliegende Rillen 31 ein. Unter der Wirkung einer zu hohen vertikalen Kraft auf den Lastaufnahmebereich, löst sich der Querbolzen 32 aus den Rillen 31 und verschiebt sich unter weiterer Anspannung der Schraubfeder 51 ebenfalls bis zu einem stationären Anschlag am Boden 19 der Ausnehmung 54 (siehe Figur 1). Bei Nachlassen der Kraftwirkung rastet er wieder in eine der beiden Rillenpositionen ein. Entsprechend gleitet, in der Funktion als eine Drehmoment-Sicherung, der Querbolzen 32 entlang den schrägen Wänden der v-förmigen Rillen 31, wenn ein zu hohes Drehmoment orthogonal zur Richtung der Lasteinleitung auf eine Waagschale wirkt. Die Waagschale wird damit vom Waagschalenträger 47 entkoppelt. Bedingt durch die Vorspannung der Schraubfeder 51 wird bei weiterem Verdrehen die nächste Rastlage bevorzugt eingenommen, da sich hierbei eine leichte Entspannung der Feder ergibt. Die Waagschale erfährt somit eine automatische Zentrierung in eine stabile Ausgangsposition. Durch die Vorspannung der Schraubfeder 51 kann ausserdem noch die Höhe der die Drehmoment-Sicherung in Gang setzenden Kraft, ebenso wie die den Überlastschutz auslösende Kraft eingestellt werden.

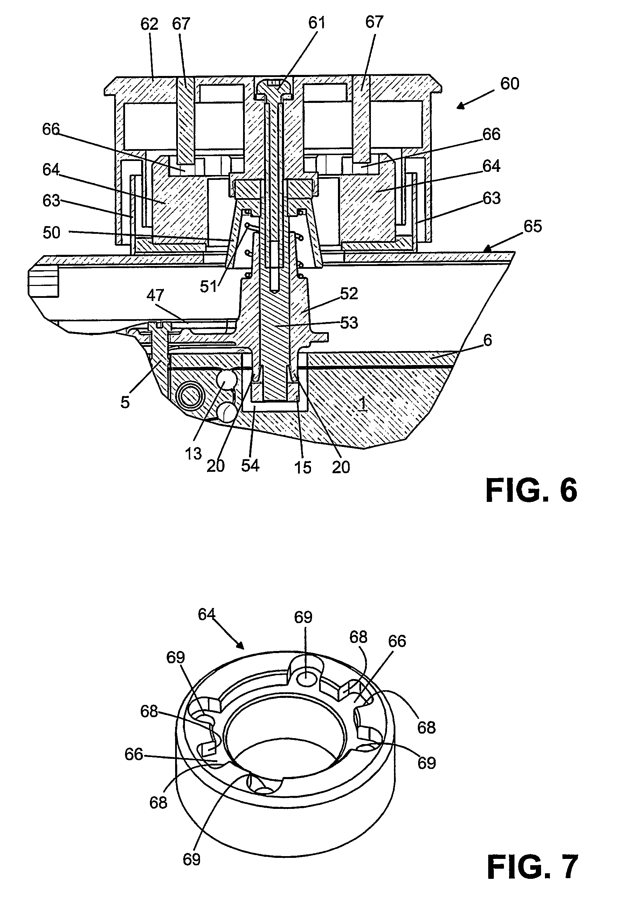

Für eine dritte Ausführungsform der erfindungsgemässen in den Überlastschutz integrierten Drehmoment-Sicherung ist in der Figur 5 lediglich ein Führungsbolzen 253 gezeigt. Hier weist der scheibenförmige Bolzenkopf 215 in Richtung des Bolzenschafts 30 seitlich je eine wulstförmige Erhebung 36 auf, die beispielsweise in je eine Rille 31 eines rohrförmigen Teils 152 des Waagschalenträgers 47, wie es anhand der Figur 4 beschrieben ist, eingreifen kann. Auch hier sind wiederum verschiedene Ausgestaltungen des Bolzenkopfs 215 mit einer, zwei, drei oder mehreren gleichmässig in einer Art wellenförmigem Profil voneinander beabstandeten Erhebungen denkbar, wobei am unteren Ende des korrespondierenden rohrförmigen Teils eine entsprechende Anzahl an v-förmigen Rillen vorhanden ist.

In besonderen Fällen, beispielsweise, wenn es erforderlich ist, die Waage beziehungsweise das Wiegemodul im Bereich der Lasteinleitung, d.h. im Bereich des Übergangs von der Waagschale zum Waagschalenträger 47, gegen das Eindringen von Staub und, im Falle der Reinigung von Spritzwasser, in das Waagengehäuse zu schützen, bietet sich für die Verbindung der Waagschale mit dem Waagschalenaufnahmekonus 50 ein kappenförmiger Aufsatz an, welcher einen möglichst engen Spalt zwischen diesem und der Oberseite des Waagengehäuses belässt. Die Figur 6 zeigt für eine Ausführung gemäss Figur 2, als Ausschnitt-Zeichnung den Bereich der Lasteinleitung, beziehungsweise den Durchtritt der die Kraft einer Last übertragenden Elemente durch das Waagengehäuse an dessen Oberseite 65, im Schnitt parallel zu den ausgedehnten Seitenflächen des Materialblocks 1 der Wägezelle. Teile, die in ihrer Ausführungsform mit denen der Figuren 1 und 2 übereinstimmen, sind mit den selben Bezugszeichen bezeichnet und sind hier nicht noch einmal beschrieben. Der kappenförmige Aufsatz 60 ist mittels einer Schraube 61 am Waagschalenaufnahmekonus 50 befestigt. Die Waagschale 62 - hier in Form einer quadratischen Plattform - steht ebenfalls mit dem Aufsatz 60 in einer festen Verbindung. In seinem unteren Bereich bildet der Aufsatz 60 zusammen mit einem in Verbindung mit der Gehäuseoberseite 65 stehenden hülsenförmigen Aussenring 63 eine Labyrinthdichtung. Den inneren Abschluss dieser Labyrinthdichtung bildend, ist ein Labyrinth-Innenring 64 um den Bereich des Durchtritts der die Kraft einer Last übertragenden Elemente durch die Gehäuseoberseite 65 angebracht, welcher ebenfalls an der Gehäuseoberseite 65, beispielsweise mittels Schrauben befestigt ist. Dieser Labyrinth-Innenring 64 weist einander in einer 180°-Anordnung gegenüberstehend zwei längliche Vertiefungen 66 auf, in welche je ein am kappenförmigen Aufsatz 60 befestigter, zylindrischer Stift 67 mit Spiel entlang eines Kreisbahnabschnitts von oben her hinein ragt.

Die beiden Vertiefungen 66 sind in Figur 7, welche eine dreidimensionale Darstellung aus der Sicht von schräg oben auf den Labyrinth-Innenring 64 zeigt, besonders deutlich zu erkennen. Die Vertiefungen 66 sind in ihren Abmessungen im Vergleich zum Durchmesser des Stifts 67 vergrössert, so dass dieser in ihnen entlang einem Kreisbahnabschnitt beweglich ist. An ihren Rändern 68 bildet eine Vertiefung 66 einen gehäusefesten Anschlag für einen Stift 67 beim Verdrehen der Waagschale 62, beziehungsweise hier des gesamten kappenförmigen Aufsatzes 60, gegenüber dem Waagschalenträger 47. Wenn, wie oben anhand der Figur 2 beschrieben, eine Tangentialkraft horizontal auf die Waagschale 62 wirkt und sich der Führungsbolzen 53 von dem rohrförmigen Teil 52 kräftemässig entkoppelt, wird durch den Anschlag ein vollständiges Herausgleiten der Nocke 20 aus ihrer Kerbe verhindert. Diese Massnahme des Vermeidens, dass sich die Drehmoment-Sicherung in ihrer Funktion von einer Rastposition in die nächste bewegt, dient der Optimierung zwischen Anforderungen, die sich einerseits aus dem Staub- und Spritzwasserschutz ergeben, nämlich, dass ein möglichst schmaler Spalt zwischen dem kappenförmigen Aufsatz 60 und der Oberseite 65 des Waagengehäuses vorhanden ist, und andererseits der Forderung nach einer vollständigen Entkopplung der Waagschale, beziehungsweise des Waagschalenaufnahmekonus 50 vom Lastaufnahmebereich 11, beziehungsweise vom Waagschalenträger 47.

Weiterhin sind in der Figur 7 die in jeweils einer eigenen Vertiefung des Labyrinth-Innenrings 64 vorhandenen Löcher 69 für die Befestigung desselben an der Oberseite 65 des Waagengehäuses gezeigt.

Weitere hier nicht detailliert beschriebene Ausführungsformen und Ausgestaltungen eines erfindungsgemässen Waagschalenträger, beispielweise basierend auf einem solchen, wie ihn die eingangs erwähnte EP-A-0 981 041 offenbart, sind in Verbindung mit einem Überlastschutz und einer darin integrierten Drehmoment-Sicherung als Bestandteil der vorliegenden Erfindung zu betrachten.

Selbstverständlich ist ein erfindungsgemässer Waagschalenträger nicht nur auf eine Wägezelle mit einer Vorrichtung zur Kraftübertragung in Form eines Materialblocks, dessen Materialbereiche durch materialfreie Bereiche in Form dünner den Materialblock senkrecht zu seiner ausgedehnten Fläche durchsetzender Schnittlinien voneinander getrennt sind, montierbar. Es sind auch Ausführungsformen des Waagschalenträgers mit einem Überlastschutz und einer darin integrierten Drehmoment-Sicherung denkbar, die auf eine Wägezelle mit einem Materialblock, dessen materialfreie Bereiche durch Fräsen erzeugt werden, montiert werden können. Ebenso ist es möglich, einen erfindungsgemässen Waagschalenträger mit weiteren nach dem Prinzip der elektromagnetischen Kraftkompensation arbeitenden Wägezellen zu verbinden.

### Bezugszeichenliste

- 1: Materialblock
- 2: Schnittlinien
- 3: Unterer Parallelogramm-Lenker
- 4: Biegelager
- 5: Schocksicherungs-Bolzen
- 6: Oberer Parallelogramm-Lenker
- 7: Biegestelle des Parallelogramms
- 8: Biegestelle des Parallelogramms
- 9: Biegestelle des Parallelogramms
- 10: Biegestelle des Parallelogramms
- 11: Lastaufnahmebereich
- 12: feststehender Bereich
- 13: Bearbeitungsbohrung
- 14: Abschnitt
- 15: Bolzenkopf
- 16: Koppelelement
- 17: Aussparung
- 18: Gewindebohrung
- 19: Boden
- 20: Nocke
- 21: Kerbe
- 22: Quersteg
- 23: Durchgangsbohrung
- 24: bogenförmigen Bereich
- 25: Verstrebung
- 26: Durchgangsloch für Schocksicherung
- 27: Hebel, Kraftübertragungshebel
- 29: Seitenteil
- 30: Bolzenschaft
- 31: Rille
- 32: Querbolzen
- 33: Untere Fläche des Führungsbolzens
- 34: Gewindebohrung
- 35: Verschmälerung
- 36: Erhebung
- 43: Bohrung
- 46: Obere Randfläche
- 47: Waagschalenträger
- 48: Schraubbolzen
- 50: Waagschalenaufnahmekonus
- 51: Schraubfeder
- 52: rohrförmiges Teil
- 53: Führungsbolzen
- 54: Ausnehmung
- 55: Ausleger
- 56: Seitliche Endfläche
- 57: Vertiefung für Referenzgewicht
- 60: Kappenförmiger Aufsatz
- 61: Schraube
- 62: Waagschale
- 63: Hülsenförmiger Aussenring
- 64: Labyrinth-Innenring
- 65: Oberseite des Waagengehäuses, Gehäuseoberseite
- 66: Längliche Vertiefung
- 67: Stift
- 68: Rand
- 69: Löcher
- 152: rohrförmiges Teil
- 153: Führungsbolzen
- 215: Bolzenkopf
- 253: Führungsbolzen

## Patentansprüche

1. Waagschalenträger (47) für eine Waage mit einer Waagschale und mit einer einen Lastaufnahmebereich (11) sowie einen feststehenden Bereich (12) aufweisenden Wägezelle, welcher Waagschalenträger (47) am Lastaufnahmebereich (11) der Wägezelle befestigt ist und einen mit ihm in lösbarem Eingriff befindlichen Überlastschutz bezüglich zu hoher vertikal wirkender Kräfte aufweist, **dadurch gekennzeichnet, dass** der sich mit der Waagschale in fester Verbindung befindliche Waagschalenträger (47) eine Drehmoment-Sicherung gegen zu hohe orthogonal zur Richtung der Lasteinleitung wirkende, insbesondere tangential an der Waagschale und/oder dem Waagschalenträger (47) angreifende Kräfte aufweist und dass diese Drehmoment-Sicherung in den Überlastschutz integriert ist.

2. Waagschalenträger (47) nach Anspruch 1, **dadurch gekennzeichnet, dass** der Waagschalenträger (47) einen Waagschalenaufnahmekonus (50) aufweist und dass die Drehmoment-Sicherung ein den Waagschalenträger (47) mit dem Waagschalenaufnahmekonus (50) in Eingriff haltendes elastisches Element aufweist.

3. Waagschalenträger (47) nach Anspruch 2, **dadurch gekennzeichnet, dass** das elastische Element eine vorgespannte Schraubfeder (51) ist.

4. Waagschalenträger (47), nach einem der Ansprüche 2 bis 3, **dadurch gekennzeichnet, dass** die Drehmoment-Sicherung Eingriffelemente (20, 21, 31, 32, 36) zum Entkoppeln und Wiederankoppeln des Waagschalenaufnahmekonus (50) vom und an den Waagschalenträger (47) aufweist.

5. Waagschalenträger (47) nach Anspruch 4, **dadurch gekennzeichnet, dass** die Eingriffelemente (20, 21, 31, 32, 36) mindestens eine Rastposition für eine Zentrierung der Waagschale in eine stabile Position aufweisen.

6. Waagschalenträger (47) nach Anspruch 4 oder 5, **dadurch gekennzeichnet, dass** für einen vom Waagschalenträger (47) entkoppelten Waagschalenaufnahmekonus (50) ein Anschlag (68) vorhanden ist, der ein vollständiges Herausgleiten der Eingriffelemente (20, 21, 31, 32, 36) auseinander vermeidet.

7. Waagschalenträger (47) nach einem der Ansprüche 1 bis 6, **dadurch gekennzeichnet, dass** der Waagschalenträger (47) ein nach unten ragendes rohrförmiges Teil (52) mit mindestens einer Nocke (20) an seinem unteren Ende aufweist und einen in Richtung der Lasteinleitung weisenden, mit dem Waagschalenaufnahmekonus (50) verbundenen Führungsbolzen (53) mit einem mindestens eine Kerbe (21) aufweisenden Bolzenkopf (15), wobei die Drehmoment-Sicherung in einem lösbaren Eingriff von Nocke (20) und Kerbe (21) besteht.

8. Waagschalenträger (47) nach einem der Ansprüche 1 bis 6, **dadurch gekennzeichnet, dass** der Waagschalenträger (47) ein nach unten ragendes rohrförmiges Teil (152) mit mindestens einer Rille (31) an seinem unteren Ende aufweist und einen in Richtung der Lasteinleitung weisenden, mit dem Waagschalenaufnahmekonus (50) verbundenen Führungsbolzen (153) mit einem nahe seinem unteren Ende integrierten Querbolzen (32) aufweist, wobei die Drehmoment-Sicherung in einem lösbaren Eingriff von Querbolzen (32) und Rille (31 ) besteht.

9. Waagschalenträger (47) nach einem der Ansprüche 1 bis 6, **dadurch gekennzeichnet, dass** der Waagschalenträger ein nach unten ragendes rohrförmiges Teil (152) mit mindestens einer Rille (31 ) an seinem unteren Ende aufweist und einen in Richtung der Lasteinleitung weisenden, mit dem Waagschalenaufnahmekonus (50) verbundenen Führungsbolzen (253) mit einem mindestens eine nach oben ragende Erhebung (36) aufweisenden Bolzenkopf (215), wobei die Drehmoment-Sicherung in einem lösbaren Eingriff von Erhebung (36) und Rille (31) besteht.

10. Waagschalenträger (47) nach einem der Ansprüche 5 bis 9, **dadurch gekennzeichnet, dass** die Drehmoment-Sicherung mehr als eine stabile Rastposition aufweist.

11. Waagschalenträger (47) nach einem der Ansprüche 3 bis 10, **dadurch gekennzeichnet, dass** die die Drehmoment-Sicherung auslösende Kraft durch die Vorspannung der Schraubfeder (51) einstellbar ist.

12. Waagschalenträger (47) nach einem der Ansprüche 1 bis 11, **dadurch gekennzeichnet, dass** die Vorrichtung zur Kraftübertragung in der Wägezelle integrierter Bestandteil eines Materialblocks (1) ist.

13. Waagschalenträger (47) nach Anspruch 12, **dadurch gekennzeichnet, dass** die Vorrichtung zur Kraftübertragung ein Parallelogramm (3, 6, 11, 12), mindestens ein Koppelelement (16) und mindestens einen Kraftübertragungshebel (27) aufweist, deren Materialbereiche von materialfreien Bereichen umgeben sind.

14. Waagschalenträger (47) nach Anspruch 13, **dadurch gekennzeichnet, dass** die Vorrichtung zur Kraftübertragung Materialbereiche aufweist, die durch materialfreie Bereiche in Form dünner den Materialblock (1) senkrecht zu seiner ausgedehnten Ebene durchsetzender Schnittlinien (2) gebildet sind.

## Claims

1. Weighing pan carrier (47) for a balance with a weighing pan and a weighing cell, the latter comprising a load-receiving portion (11) and a stationary portion (12), wherein the weighing pan carrier (47) is fastened to the load-receiving portion (11) and has an overload protection device against excessive vertically directed forces that is releasably engaged with the weighing pan carrier, **characterized in that** the weighing pan carrier (47), which has a fixed connection to the weighing pan, has a torque safety feature against excessive forces acting in particular tangentially on the weighing pan and/or on the weighing pan carrier (47) in a direction perpendicular to the direction of the weighing load, and further **characterized in that** the torque safety feature is integrated in the overload protection device.

2. Weighing pan carrier (47) according to claim 1, **characterized in that** the weighing pan carrier (47) is equipped with a seating cone (50) for the weighing pan and the torque safety feature comprises an elastic element that keeps the weighing pan carrier (47) engaged with the seating cone (50).

3. Weighing pan carrier (47) according to claim 2, **characterized in that** the elastic element is a pretensioned helix spring (51).

4. Weighing pan carrier (47) according to claim 2 or 3, **characterized in that** the torque safety feature has mutually engaging elements (20, 21, 31, 32, 36) that serve to uncouple and re-couple the engagement between the seating cone (50) and the weighing pan carrier (47).

5. Weighing pan carrier (47) according to claim 4, **characterized in that** the mutually engaging elements (20, 21, 31, 32, 36) have at least one detent position for centering the weighing pan in a stable position.

6. Weighing pan carrier (47) according to claim 4 or 5, **characterized in that** a restraining stop (68) is provided, which prevents the mutually engaging elements (20, 21, 31, 32, 36) from sliding totally out of engagement when the seating cone (50) for the weighing pan is uncoupled from the weighing pan carrier (47).

7. Weighing pan carrier (47) according to one of the claims 1 to 6, **characterized in that** the weighing pan carrier (47) comprises a downward-projecting tubular part (52) with at least one nose-shaped protrusion (20) at its lower end, and further comprises a guide bolt (53) that extends along the line of force introduction, is connected to the seating cone (50) and has a bolt head (15) with at least one indentation (21), wherein the torque safety feature consists of a releasable engagement between the nose-shaped protrusion (20) and the indentation (21).

8. Weighing pan carrier (47) according to one of the claims 1 to 6, **characterized in that** the weighing pan carrier (47) comprises a downward-projecting tubular part (152) with at least one indentation (31) at its lower end, and further comprises a guide bolt (153) that extends along the line of force introduction and is connected to the seating cone (50) and has a transverse pin (32) installed near its bottom end, wherein the torque safety feature consists of a releasable engagement between the transverse pin (32) and the indentation (31).

9. Weighing pan carrier (47) according to one of the claims 1 to 6, **characterized in that** the weighing pan carrier (47) comprises a downward-projecting tubular part (152) with at least one indentation (31) at its lower end, and further comprises a guide bolt (253) that extends along the line of force introduction and is connected to the seating cone (50) and has a bolt head (215) with at least one upward-directed projection (36), wherein the torque safety feature consists of a releasable engagement between the projection (36) and the indentation (31).

10. Weighing pan carrier (47) according to one of the claims 5 to 9, **characterized in that** the torque safety feature has more than one stable detent position.

11. Weighing pan carrier (47) according to one of the claims 3 to 10, **characterized in that** the force that will release the torque safety feature can be set by adjusting the pre-tension of the helix spring (51).

12. Weighing pan carrier (47) according to one of the claims 1 to 11, **characterized in that** the weighing cell includes a force-transmitting mechanism that is formed in a material block (1) as an integral part of the weighing cell.

13. Weighing pan carrier (47) according to claim 12, **characterized in that** the force-transmitting mechanism comprises a parallelogram linkage (3, 6, 11, 12), at least one coupling element (16), and at least one force-transmitting lever (27) constituted by material portions of the block that are separated from each other by material-free spaces.

14. Weighing pan carrier (47) according to claim 13, **characterized in that** the force-transmitting mechanism comprises material portions of the block that are separated from each other by material-free spaces in the form of narrow linear cuts (2) traversing the material block (1) perpendicular to its main plane.

## Revendications

1. Support de plateau (47) pour une balance comprenant un plateau et une cellule de pesée présentant une zone de réception de charge (11) et une zone (12) fixe, lequel support de plateau (47) est fixé sur la zone de réception de charge (11) de la cellule de pesée et présente une protection de surcharge se trouvant en engrènement détachable avec lui concernant des forces trop élevées et agissant verticalement, **caractérisé en ce que** le support de plateau (47) se trouvant en liaison fixe avec le plateau présente une protection de couple par rapport à des forces trop élevées, agissant perpendiculairement à la direction de l'application de charge, s'appliquant en particulier de façon tangentielle sur le plateau et/ou le support de plateau (47) et **en ce que** ce blocage de couple est intégré dans la protection de surcharge.

2. Support de plateau (47) selon la revendication 1, **caractérisé en ce que** le support de plateau (47) présente un cône de réception de plateau (50) et **en ce que** la protection de couple présente un élément élastique maintenant le support de plateau (47) en prise avec le cône de réception de plateau (50).

3. Support de plateau (47) selon la revendication 2, **caractérisé en ce que** l'élément élastique est un ressort cylindrique (51) prétendu.

4. Support de plateau (47) selon une revendication 2 ou 3, **caractérisé en ce que** la protection de couple présente des éléments d'engrènement (20, 21, 31, 32, 36) pour le découplage et le réaccouplage du cône de réception de plateau (50) par rapport au support de plateau (47).

5. Support de plateau (47) selon la revendication 4, **caractérisé en ce que** les éléments d'engrènement (20, 21, 31, 32, 36) présentent au moins une position d'arrêt pour un centrage du plateau dans une position stable.

6. Support de plateau (47) selon la revendication 4 ou 5, **caractérisé en ce qu'**une butée (68), qui évite une sortie par glissement complète des éléments d'engrènement (20, 21, 31, 32, 36) les uns des autres, est présente pour un cône de réception de plateau (50) dissocié du support de plateau (47).

7. Support de plateau (47) selon l'une quelconque des revendications 1 à 6, **caractérisé en ce que** le support de plateau (47) présente une partie (52) de forme tubulaire et dépassant vers le bas avec au moins une came (20) sur son extrémité inférieure et un boulon de guidage (53) dirigé en direction de l'application de la charge et relié au cône de réception de plateau (50) avec une tête de boulon (15) présentant au moins une encoche (21), la protection de couple consistant en un engagement détachable de la came (20) et de l'encoche (21).

8. Support de plateau (47) selon l'une quelconque des revendications 1 à 6, **caractérisé en ce que** le support de plateau (47) présente une partie (152) de forme tubulaire et dépassant vers le bas avec au moins une rainure (31) sur son extrémité inférieure et un boulon de guidage (153) dirigé en direction de l'application de la charge et relié au cône de réception de plateau (50) avec un boulon transversal (32) intégré à proximité de son extrémité inférieure, la protection de couple consistant dans un engagement détachable du boulon transversal (32) et de la rainure (31).

9. Support de plateau (47) selon l'une quelconque des revendications 1 à 6, **caractérisé en ce que** le support de plateau (47) présente une partie (152) de forme tubulaire et dépassant vers le bas avec au moins une rainure (31) sur son extrémité inférieure et un boulon de guidage (253) dirigé en direction de l'application de la charge et relié au cône de réception de plateau (50) avec une tête de boulon (215) présentant au moins une élévation (36) dépassant vers le haut, la protection de couple consistant en un engagement détachable de l'élévation (36) et de la rainure (31).

10. Support de plateau (47) selon l'une quelconque des revendications 5 à 9, **caractérisé en ce que** la protection du couple présente plus qu'une position d'arrêt stable.

11. Support de plateau (47) selon l'une quelconque des revendications 3 à 10, **caractérisé en ce que** la force déclenchant la protection du couple peut être réglée par la pré-tension du ressort cylindrique (51).

12. Support de plateau (47) selon l'une quelconque des revendications 1 à 11, **caractérisé en ce que** la cellule de pesée présente un dispositif pour la transmission de force qui est un constituant intégré d'un bloc de matériau (1).

13. Support de plateau (47) selon la revendication 12, **caractérisé en ce que** le dispositif pour la transmission de force présente un parallélogramme (3, 6, 11, 12), au moins un élément de couplage (16) et au moins un levier de transmission de force (27), dont les zones de matériau sont entourées par des zones sans matériau.

14. Support de plateau (47) selon la revendication 13, **caractérisé en ce que** le dispositif pour la transmission de force présente des zones de matériau qui sont formées par des zones sans matériau sous la forme de lignes de coupe (2) minces et traversant le bloc de matériau (1) perpendiculairement à son plan étendu.
